# EUROPEAN PATENT SPECIFICATION

(11) **EP 4 532 374 B1**
(45) Date of publication and mention of the grant of the patent: **18.02.2026**
(21) Application number: 23732206.0
(22) Date of filing: 23.05.2023
(51) Int. Cl.: B65G 17/22, B65G 17/32, B65G 21/20

(54) **A TRANSPORT SYSTEM OF PRODUCTS BY MEANS OF A CLOSED LOOP COGGED BELT WITH A VERTICAL ACTIVATION AXIS**
TRANSPORTSYSTEM FÜR PRODUKTE MITTELS EINES GESCHLOSSENEN ZAHNRADBANDES MIT VERTIKALER AKTIVIERUNGSACHSE
SYSTÈME DE TRANSPORT DE PRODUITS AU MOYEN D'UNE COURROIE CRANTÉE EN BOUCLE FERMÉE AVEC UN AXE D'ACTIVATION VERTICAL

(30) Priority: 25.05.2022 IT 202200010853
(43) Date of publication of application: 09.04.2025
(73) Proprietor: Marchesini Group S.p.A., 40065 Pianoro (Bologna) (IT)
(72) Inventor: NANNETTI, Simone, 40030 GRIZZANA MORANDI (BO) (IT)
(74) Representative: Dall'Olio, Christian
(86) International application number: PCT/IB2023/055276
(87) International publication number: WO 2023/228067

(56) References cited:
- DE-A1- 102006 062 530
- DE-U1- 202012 009 051
- US-A1- 2008 271 976
- US-B1- 6 405 852
- US-B2- 10 562 654

## Description

### FIELD OF THE INVENTION

The present invention relates to the special technical sector concerning transport systems of products which use a closed loop conveyor means, such as for example a cogged belt wound in a closed loop on relative driving pulleys having a vertical axis.

The transport systems are utilised to carry out the transport of products while substantially maintaining the products constantly at a same height from the ground surface, and in a looped pathway along which various work stations are positioned, which stations are delegated to carrying out special operations or processes on the products.

For example, this particular type of transport systems is especially used in the transport of the tubes that are open at a relative end, which must be maintained in a vertical position, with the open end facing upwards, always positioned at a same height, and which must always be transported at successive work stations designed to carry out filling, closure and possibly marking thereof, and so on.

### DESCRIPTION OF THE PRIOR ART

The known transport systems of this type therefore comprise a cogged belt wound in a closed loop on relative driving pulleys arranged with the relative axis vertical, and a series of support elements for the products that are coupled, and constrained, in a cantilever fashion to the cogged belt.

The support elements are conformed in such a way as to comprise a housing, or a suitable seat, for receiving and supporting the products that are to be transported to successive work stations by the activation, either in continuous mode or step mode (alternated mode), of the belt.

The support elements are coupled to the cogged belt at through-holes, realised on the cogged belt, and are constrained to the cogged belt by respective fixing elements which are arranged at the through-holes on the inner side of the cogged belt, i.e. the side having the cogging for enmeshing with the driving pulleys.

During the activation of the cogged belt, the support elements, owing to the weight of the products borne thereby and the speeds at which the cogged belt can be activated, are subject to flexion stresses which can compromise the stability of the products, as well as influencing the effective orientation thereof.

For example in the case of products constituted by tubes, they might not be maintained in a correct vertical configuration, and this is a circumstance that might compromise the filling and closure operations.

At present, in order to obviate these drawbacks, in the known transport systems, sliding block elements, also known as shuttles, are associated to the fixing elements of the support elements, and respective straight guides are associated to the cogged belt at the relative straight portions, which guides can accommodate the sliding block elements slidably therein.

In this way, when the support elements are moved along the two straight portions of the cogged belt, at which the work stations are usually located, the support elements are to some extent maintained stable in the cantilever positions thereof with respect to the cogged belt, as the sliding block elements slide internally of the straight sliding guides.

This type of transport system however has a number of drawbacks.

In fact, issues can emerge relating to correct insertion of the sliding block elements internally of the straight guides at the passage of the sliding block elements from a curved portion of the belt to a straight portion of the belt, as well as, vice versa, from a curved portion to a straight portion.

This can cause the onset of impacts and stresses on the sliding block elements which have repercussions on the fixing elements and therefore on the stability of the coupling of the support elements to the cogged belt, or can even lead to sticking which might place the continuity of activation of the cogged belt in jeopardy.

Thuse the fixing elements might break, or there might be a loosening of the coupling of the support elements to the cogged belt.

Further, any eventual impacts might generate an unpleasant noise level.

Document US 10 562 654 B2 discloses a machine for packaging single use capsule for beverages comprising a transport system for transporting rigid bodies. The transport system comprises a cogged belt wound in a closed loop on driving pulleys which are arranged with a vertical rotation axis, a series of support elements configured to support respective products and which are coupled in a cantilever fashion to the cogged belt, a series of fixing elements configured to be arranged internally with respect to the cogged belt, for fixing the support elements in a cantilever fashion to the cogged belt; a guide system for the fixing elements.

The guide system of the transport system further comprises a first continuous upper guide channel conformed in such a way as to present a respective first outer edge and a respective first inner edge, a second continuous lower guide channel conformed in such a way as to have a respective second outer edge and a respective second inner edge and comprising straight portions arranged at the straight branches of the cogged belt.

Document US 6405852 discloses a similar transport device in a packaging machine with a driving belt and a series of cantilevered product holders.

### SUMMARY OF THE INVENTION

The aim of the present invention is therefore to describe a new transport system for transport of products by means of a cogged belt that is closed loop wound with a vertical activation axis and that is able to obviate the above-cited drawbacks present in prior art.

In particular, the aim of the present invention is to describe a novel transport system which enables conserving the fixing to and stability of the support elements of the products on the belt, thus guaranteeing the orientation thereof both in the straight portions and the curved portions of the cogged belt.

The above-mentioned advantages are obtained according to the contents of the claims.

### BRIEF DESCRIPTION OF THE DRAWINGS

The characteristics of a preferred but not exclusive embodiment of the transport system of the present invention will be set out in the following description made with reference to the appended tables of drawings, in which:

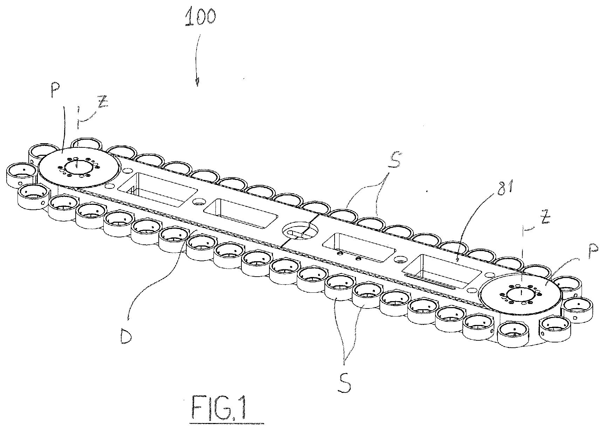

- figure 1 is a schematic perspective view of the transport system of the present invention, in its entirety;
- figure 2 is a partial schematic perspective view of a portion of the transport system of the invention, with some parts removed;
- figure 3 is a partial exploded and perspective view of the significant components that make up the transport system of the invention;
- figure 4 is an exploded and perspective view of some significant components of the transport system of the invention;
- figure 5 is a perspective view of the components of figure 4, coupled and assembled to one another;
- figure 6 is a perspective view taken from another angle of the components of figure 5, assembled to one another;
- figure 7 is a partial view from above of a portion of the transport system of the invention;
- figure 8 illustrates, again in a partial view from above, the portion of the transport system of figure 7, with some components removed so as to evidence other components of the transport system;
- figure 9 is a view according to a section plane that is vertical and transversal to the transport system;
- figure 10 illustrates, in a partial schematic view, some significant components of the transport system of the invention, extrapolate from the remaining other components, in a particular operating configuration.

### DESCRIPTION OF PREFERRED EMBODIMENTS

With reference to the accompanying tables of drawings, numerical reference (100) denotes the transport system of products in a closed looped transport path that is the object of the present invention, in its entirety.

The transport system (100) comprises a cogged belt (D) wound in a closed loop on driving pulleys (P) which are arranged with a vertical rotation axis (Z), and a series of support elements (S), configured to support respective products, which are coupled in a cantilever fashion to the cogged belt (D).

The support elements (S) can for example be configured in such a way as to comprise a positioning seat for the vertical positioning of tubes that are to be filled and then closed, or can be made in a different way according to the type of products that are to be transported.

The support elements (S) are coupled in a cantilever fashion to the cogged belt (D) at the position of the through-holes (F) made in the cogged belt (D) and the transport system (100) further comprises a series of fixing elements (1) which are configured to be arranged internally with respect to the cogged belt (D) at the through-holes (F), for the fixing of the support elements (S) in a cantilever fashion to the cogged belt (D).

The transport system (100) further comprises a guide system (10) for guiding the fixing elements (1) during the activation of the cogged belt (D) with the aim of maintaining the support elements (S) stable in the cantilevered position thereof on the cogged belt (D), and thus stably maintaining the products supported thereby during the transport thereof.

The peculiarities of the transport system (100) of the invention consist in the ways in which the guide system (10) of the fixing elements (1) are realised and configured.

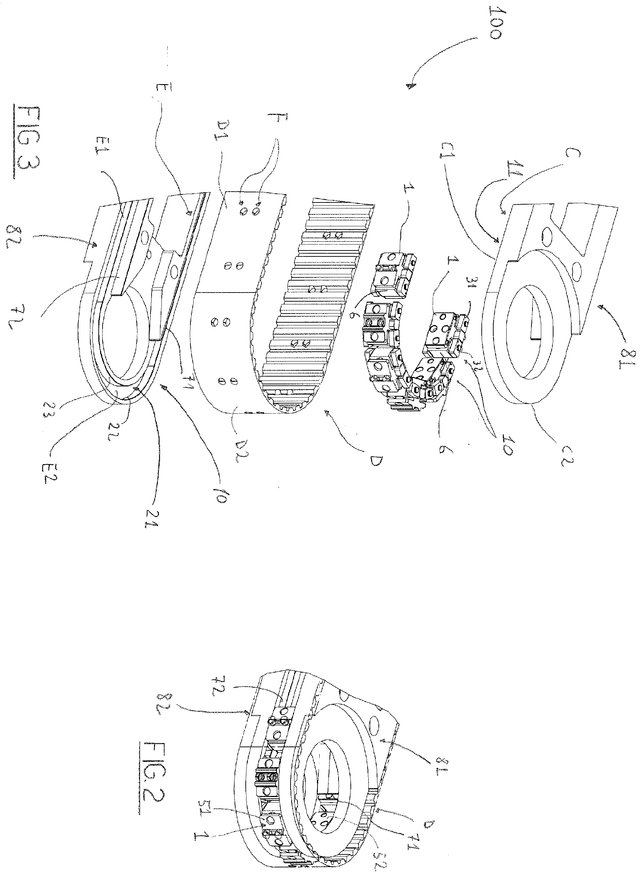

The guide system (10) comprises (see for example figures 3, 8, and 9):
a first continuous upper guide channel (11), which is conformed in such a way as to present a respective first outer edge (12) and a respective first inner edge (13) and which extends according to a closed loop path (C) internally of the closed loop of the cogged belt (D) and comprises straight portions (C1) arranged at straight branches (D1) of the cogged belt (D), and curved portions (C2), connected to the straight portions (C1), at the curvilinear branches (D2) of the cogged belt (D),
and a second continuous lower guide channel (21), conformed in such a way as to present a respective second outer edge (22) and a respective second inner edge (23) and which extends according to a closed loop path (E) internally of the closed loop of the cogged belt (D) and comprises straight portions (E1), arranged at the straight branches (D1) of the cogged belt (D), and curved portions (E2), connected to the straight portions (E1) at the curvilinear branches (D2) of the cogged belt (D).

Further, the guide system (10) also comprises, for each fixing element (1) (visible in detail for example in figures 3, 4, 5 and 6), at least a first sliding element (31, 32), and at least a second sliding element (41, 42).

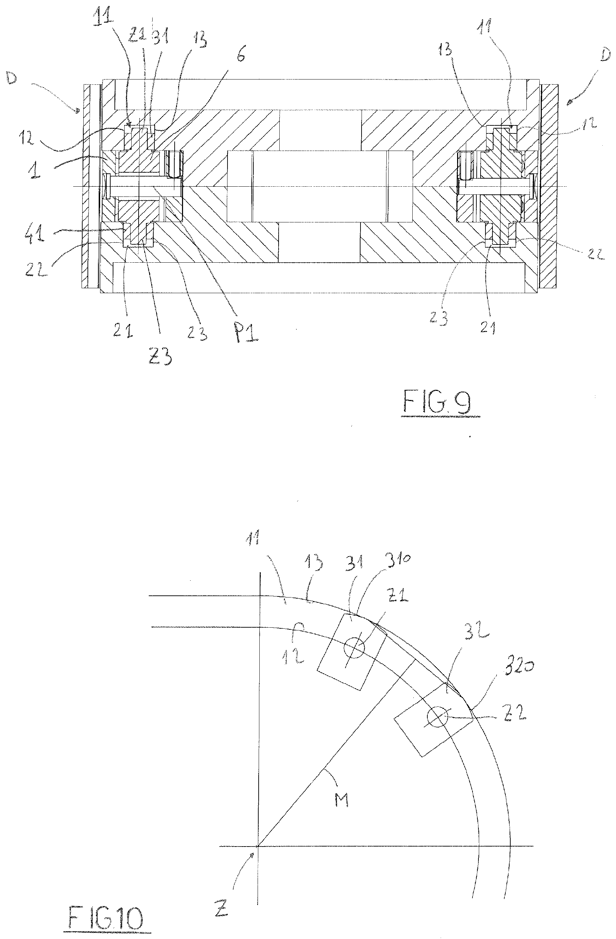

The at least a first sliding element (31, 32) is arranged superiorly of the fixing element (1) and is configured to be able to slide internally of the first continuous upper guide channel (11), between the first outer edge (12) and the first inner edge (13) (see for example figure 9).

Regarding this, the at least a first sliding element (31, 32) is conformed in such a way as to comprise a respective first contact wall (310, 320), for the contact with the first outer edge (12) of the first continuous upper guide channel (11), and a respective second contact wall (311, 321), for the contact with the first inner edge (13) of the first continuous upper guide channel (11).

Further, the at least a first sliding element (31, 32) is superiorly coupled to the fixing element (1) in such a way:
as to be able both to rotate with respect to the fixing element (1) according to a vertical axis, parallel to the vertical rotation axis (Z) of the driving pulleys (P) of the cogged belt (D),
and to be able to translate axially with respect to the fixing element (1) along a translation direction (DT) perpendicular to the vertical axis.

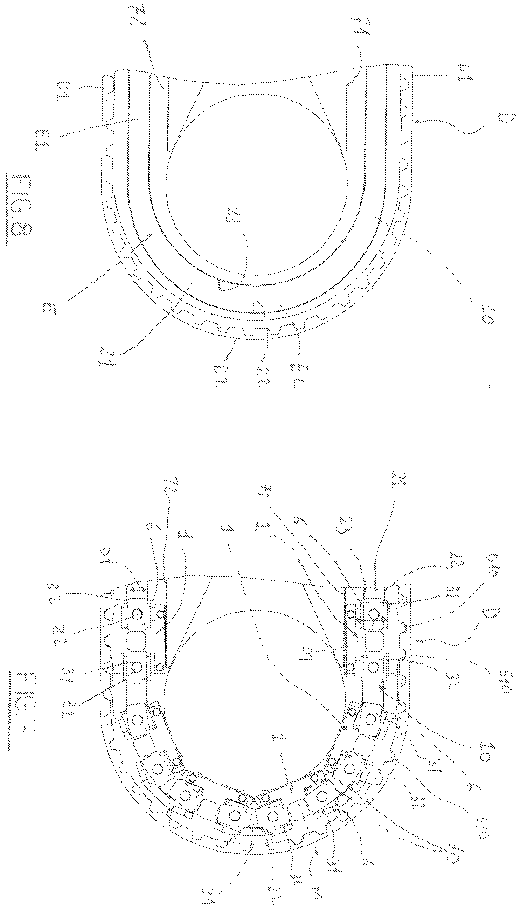

In this way, during the activation of the cogged belt (D), the at least a first sliding element (31, 32) can change the orientation and position thereof with respect to the fixing element (1) as a consequence of the passage thereof from a straight portion (C1) to a curved portion (C2), and vice versa, of the first continuous upper guide channel (11) and thus adapt the orientation thereof within the first continuous upper guide channel (11) in such a way that at least one from between the respective first contact wall (310, 320) and the respective second contact wall (311, 321) is always in contact respectively with the first outer edge (12) or the first inner edge (13) of the first continuous upper guide channel (11) (see for example figure 7 and figure 9).

In turn, the at least a second sliding element (41, 42) is arranged inferiorly with respect to the fixing element (1) and is configured to be able to slide internally of the second continuous lower guide channel (21), between the second outer edge (22) and the second inner edge (23) (see for example figure 9).

For this purpose, the at least a second sliding element (41, 42) is conformed in such a way as to comprise a respective first contact wall (410, 420), for the contact with the second outer edge (22) of the second continuous lower guide channel (21), and a respective second contact wall (411, 421), for the contact with the second inner edge (23) of the second continuous lower guide channel (21).

Further, as for the at least a first sliding element (31, 32), the at least a second sliding element (41, 42) is inferiorly coupled to the fixing element (1) in such a way: as to be able both to rotate with respect to the fixing element (1) according to a vertical axis, parallel to the vertical rotation axis (Z) of the driving pulleys (P) of the cogged belt (D),
and in such a way as to be able to translate axially with respect to the fixing element (1) along a translation direction (DT) perpendicular to the vertical axis, so that, during the activation of the cogged belt (D), the at least a second sliding element (41, 42) can change the orientation and position thereof with respect to the fixing element (1) as a consequence of the passage thereof from a straight portion (E1) to a curved portion (E2), and vice versa, of the second continuous lower guide channel (21) and thus adapt the orientation thereof within the second continuous lower guide channel (21) in such a way that at least one from between the respective first contact wall (410, 420) and the respective second contact wall (411, 421) is always in contact respectively with the second outer edge (22) or the second inner edge (23) of the second continuous lower guide channel (21).

Therefore, owing to the presence of the two continuous guide channels, and to the fact that both the at least a first sliding element and the at least a second sliding element can slide internally, respectively, of the first continuous guide channel and the second continuous lower guide channel, and can, with respect to the respective fixing element, both rotate about a vertical axis parallel to the rotation axis of the driving pulleys (P) of the cogged belt, and translate along a translation direction that is perpendicular to the vertical axis of rotation thereof, and can change the orientation thereof and the position thereof internally of the guide channels, while constantly maintaining the contact with the edges of the guide channels, at least with one respective wall thereof.

This enables maintaining the fixing element stable, during the movement imparted by the activation of the cogged belt, and then, consequently, maintaining in stability the position and cantilevered orientation of the support element fixed to the cogged belt by the fixing element, and therefore the product supported thereby.

Further, as a continuity of contact is always guaranteed between at least one of the walls of the at least a first sliding element and at least one of the walls of the at least a second sliding element with at least one of the two edges of the two continuous guide channels, especially in the passage points from the straight portions to the curved portions thereof, and vice versa, the activation of the cogged belt will be fluid and continuous, without noise or risk of sticking, and further activatable even at high velocities.

Further advantageous characteristics of the transport system of the present invention are described in the following.

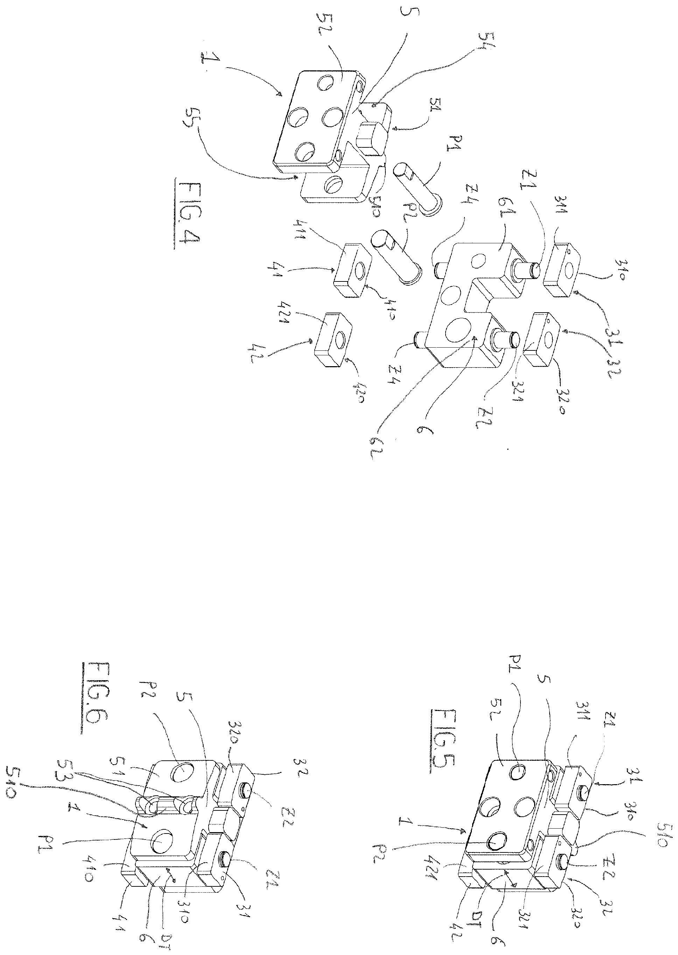

On the basis of the preferred embodiment, illustrated in the figures, for example in figures 4, 5 and 6, each fixing element (1) comprises a main body (5) which is conformed in such a way as to comprise a first front wall (51) and a second rear wall (52), wherein the first front wall (51) comprises respective fixing holes (53) and is conformed in such a way as to be internally coupled to the cogging of the cogged belt (D) in such a way that the respective fixing holes (53) are positioned at the through-holes (F) present in the cogged belt (D) for fixing the support elements (S) to the cogged belt (D) by means of respective blocking members (see figures 3 and 7).

Further, the main body (5) of each fixing element (1) is conformed in such a way as to comprise, between the first front wall (51) and the second rear wall (52), a positioning housing (54, 55).

In this regard, the guide system (10) comprises, for each fixing element (1), a bearing element (6) for the at least a first sliding element (31, 32) and for the at least a second sliding element (41, 42) which is conformed in such a way as to be inserted and coupled translatably within the positioning housing (54, 55) of the fixing element (1) in order to be able to translate axially between the first front wall (51) and the second front wall (52) of the fixing element (1) according to the translation direction (DT) (figures 4, 5 and 6).

Further, the at least a first sliding element (31, 32) is superiorly mounted to the bearing element (6) rotatably about a respective vertical pin (Z1, Z2) parallel to the vertical rotation axis (Z) of the pulleys (P) and the at least a second sliding element (41, 42) is mounted inferiorly to the bearing element (6) rotatably about a respective vertical pin (Z3, Z4) parallel to the vertical rotation axis (Z) of the pulleys (P).

According to the preferred but not exclusive embodiment illustrated in the figures (see figures 4, 5 and 6 again), for each fixing element (1), the bearing element (6) is inserted in the positioning housing (54, 55) of the fixing element (1) and is slidably mounted on at least a respective pin (P1, P2) arranged axially to cross the positioning housing (54, 55) between the first front wall (51) and the second rear wall (52) of the main body (5) of the fixing element (1).

Once more according to the preferred but not exclusive embodiment illustrated in the figures, the main body (5) of each fixing element (1) is H-shaped in such a way as to define, between the first front wall (51) and the second rear wall (52) two positioning housings (54, 55), while the bearing element (6) is U-shaped with the two arms (61, 62) of the U shape being respectively positioned in the two positioning housings (54, 55) (in particular see figures 4, 5 and 6 again).

In the illustrated preferred embodiment, the guide system (10) is realised in such a way as to comprise a pair (31, 32) of first sliding elements (31, 32) which are mounted rotatably about respective two vertical pins (Z1, Z2) borne superiorly on the bearing element (6) and arranged bilaterally, and equidistant, to the axial plane (M) of the main body (5) of the fixing element (1), and a pair (41, 42) of second sliding elements (41, 42) which are mounted rotatably about respective two vertical pins (Z3, Z4) borne inferiorly on the bearing element (6) and arranged bilaterally, and equidistant, to the axial plane (M) of the main body (5) of the fixing element (1).

The first contact wall (310, 320) of the at least a first sliding element (31, 32), for the contact with the first outer edge (12) of the first continuous upper guide channel (11), is preferably conformed in such a way as to have a curved profile, and in which the first contact wall (410, 420) of the at least a second sliding element (41, 42), for the contact with the second outer edge (23) of the second continuous lower guide channel (21), is conformed in such a way as to have a curved profile.

In this way, at least a point of contact between the at least a first sliding element and the outer edge of the first continuous upper guide channel is guaranteed, as well as a point of contact between the at least a second sliding element and the outer edge of the second continuous lower guide channel.

For example, figure 10 schematically illustrates, schematically, the position assumed by a pair of first sliding elements (31, 32), mounted on a support element coupled to a respective fixing element, in relation to a curved portion of the first continuous upper guide channel (11), during the activation of the cogged belt.

The first sliding elements (31, 32), being able, with respect to the fixing element coupled to the cogged belt, to rotate about a vertical axis and translate along a translation direction perpendicular to the vertical axis, can continuously vary their orientation and position within the first continuous guide channel in such a way as always to have at least two respective points of contact between the respective outer walls (310, 320) and the outer edge (13) of the first continuous upper guide channel (11).

In this way, the axial axis (M) of the fixing element will always be radial to the vertical rotation axis of the pulleys, and further the chord defined between the points of contact of the two sliding elements will be perpendicular to the axial axis (M) of the fixing element.

In a further preferred aspect, the guide system (100) comprises at least a pair of straight abutment walls (71, 72) which are arranged internally of the cogged belt (D) and facing the straight branches (D1) of the cogged belt (D) destined to constitute a straight abutment guide for the second wall (52) of the fixing elements (1) during the movement thereof along a straight branch (D1) of the cogged belt (D).

In a further advantageous aspect, the first wall (51) of each fixing element (5) is conformed in such a way as to comprise at least a projection (510) having a suitable shape for being inserted in a space existing between contiguous teeth of the cogging of the cogged belt (D), and wherein the fixing holes (53) of each fixing element (1) are made at the at least a projection (510).

The transport system (100) further comprises a first upper covering element (81), mounted superiorly to the cogged belt (D) and conformed in such a way that in the relative lower face there is a groove in a closed loop defining the first continuous upper guide channel (11), as well as a second lower covering element (82), mounted inferiorly to the cogged belt (D) and conformed in such a way that in the relative upper face there is a groove in a closed loop defining the second continuous lower guide channel (21).

## Claims

1. A transport system (100) of products according to a closed looped transport path, comprising:
a cogged belt (D) wound in a closed loop on driving pulleys (P) which are arranged with a vertical rotation axis (Z);
a series of support elements (S), configured to support respective products and which are coupled in a cantilever fashion to the cogged belt (D) at through-holes (F) made in the cogged belt (D);
a series of fixing elements (1), configured to be arranged internally with respect to the cogged belt (D) at the through-holes (F), for fixing the support elements (S) in a cantilever fashion to the cogged belt (D);
a guide system (10) for the fixing elements (1);
wherein the guide system (10) comprises:
a first continuous upper guide channel (11), conformed in such a way as to present a respective first outer edge (12) and a respective first inner edge (13) and which extends according to a closed loop path (C) internally of the closed loop of the cogged belt (D) and comprising straight portions (C1), arranged at straight branches (D1) of the cogged belt (D), and curved portions (C2), connected to the straight portions (C1), at curvilinear branches (D2) of the cogged belt (D),
a second continuous lower guide channel (21), conformed in such a way as to have a respective second outer edge (22) and a respective second inner edge (23) and which extends according to a closed loop path (E) internally of the closed loop of the cogged belt (D) and comprising straight portions (E1), arranged at straight branches (D1) of the cogged belt (D), and curved portions (E2), connected to the straight portions (E1), at curvilinear branches (D2) of the cogged belt (D),
and in that the guide system (10) further comprises, for each fixing element (1):
at least a first sliding element (31, 32) arranged superiorly with respect to the fixing element (1) and configured to be able to slide internally of the first continuous upper guide channel (11), between the first outer edge (12) and the first inner edge (13), with the at least a first sliding element (31, 32) which is conformed in such a way as to comprise a respective first contact wall (310, 320), for contact with the first outer edge (12) of the first continuous upper guide channel (11), and a respective second contact wall (311, 321), for contact with the first inner edge (13) of the first continuous upper guide channel (11), wherein the at least a first sliding element (31, 32) is superiorly coupled to the fixing element (1) in such a way as to be able to rotate with respect to the fixing element (1) according to a vertical axis, parallel to the vertical rotation axis (Z) of the driving pulleys (P) of the cogged belt (D), and to be able to translate axially with respect to the fixing element (1) along a translation direction (DT) perpendicular to the vertical axis, so that, during the driving of the cogged belt (D), the at least a first sliding element (31, 32) can change the orientation and position thereof with respect to the fixing element (1) as a consequence of the passage thereof from a straight portion (C1) to a curved portion (C2), and vice versa, of the first continuous upper guide channel (11) and thus adapt the orientation thereof within the first continuous upper guide channel (11) in such a way that at least one from between the respective first contact wall (310, 320) and the respective second contact wall (311, 321) is always in contact respectively with the first outer edge (12) or the first inner edge (13) of the first continuous upper guide channel (11);
and at least a second sliding element (41, 42) arranged inferiorly with respect to the fixing element (1) and configured to be able to slide internally of the second continuous lower guide channel (21), between the second outer edge (22) and the second inner edge (23), with the at least a second sliding element (41, 42) being conformed in such a way as to comprise a respective first contact wall (410, 420), for contact with the second outer edge (22) of the second continuous lower guide channel (21), and a respective second contact wall (411, 421), for contact with the second inner edge (23) of the second continuous lower guide channel (21), wherein the at least a second sliding element (41, 42) is inferiorly coupled to the fixing element (1) in such a way as to be able to rotate with respect to the fixing element (1) according to a vertical axis, parallel to the vertical rotation axis (Z) of the driving pulleys (P) of the cogged belt (D), and to be able to translate axially with respect to the fixing element (1) along a translation direction (DT) perpendicular to the vertical axis, so that, during the driving of the cogged belt (D), the at least a second sliding element (41, 42) can change the orientation and position thereof with respect to the fixing element (1) as a consequence of the passage thereof from a straight portion (E1) to a curved portion (E2), and vice versa, of the second continuous lower guide channel (21) and thus adapt the orientation thereof within the second continuous lower guide channel (21) in such a way that at least one from between the respective first contact wall (410, 420) and the respective second contact wall (411, 421) is always in contact respectively with the second outer edge (22) or the second inner edge (23) of the second continuous lower guide channel (21);
thus stably maintaining the cantilevered position, and the orientation, of the support elements (S) with respect to the cogged belt (D).

2. The transport system (100) as claimed in claim 1, wherein each fixing element (1) comprises a main body (5) comprising a first front wall (51) and a second rear wall (52), wherein the first front wall (51) comprises respective fixing holes (53) and is conformed in such a way as to be internally coupled to the cogging of the cogged belt (D) in such a way that the respective fixing holes (53) are positioned at the through-holes (F) present in the cogged belt (D) for fixing the support elements (S) to the cogged belt (D) by means of respective blocking members, and wherein the main body (5) of each fixing element (1) is conformed in such a way as to comprise, between the first front wall (51) and the second rear wall (52), a positioning housing (54, 55), and in that the guide system (10) comprises, for each fixing element (1), a bearing element (6) for the at least a first sliding element (31, 32) and for the at least a second sliding element (41, 42), with the bearing element (6) being conformed in such a way as to be inserted and coupled translatably within the positioning housing (54, 55) of the fixing element (1) in order to be able to translate axially between the first front wall (51) and the second front wall (52) of the fixing element (1) according to the translation direction (DT), and wherein the at least a first sliding element (31, 32) is mounted superiorly of the bearing element (6) rotatably about a respective vertical pin (Z1, Z2) parallel to the vertical rotation axis (Z) of the pulleys (P) and the at least a second sliding element (41, 42) is mounted inferiorly to the bearing element (6) rotatably about a respective vertical pin (Z3, Z4) parallel to the vertical rotation axis (Z) of the pulleys (P).

3. The transport system (100) as claimed in claim 2, wherein, for each fixing element (1), the bearing element (6) is inserted in the positioning housing (54, 55) of the fixing element (1) and is slidably mounted on at least a respective pin (P1, P2) arranged axially to cross the positioning housing (54, 55) between the first front wall (51) and the second rear wall (52) of the main body (5) of the fixing element (1).

4. The transport system (100) as claimed in any one of claims 2 and 3, wherein the main body (5) of each fixing element (1) is H-shaped in such a way as to define, between the first front wall (51) and the second rear wall (52), two positioning housings (54, 55), and wherein the bearing element (6) is U-shaped with the two arms (61, 62) of the U-shape being respectively positioned in the two positioning housings (54, 55).

5. The transport system (100) as claimed in any one of claims from 2 to 4, wherein, for each fixing element (1), the guide system (10) comprises a pair (31, 32) of first sliding elements (31, 32) which are mounted rotatably about respective two vertical pins (Z1, Z2) borne superiorly on the bearing element (6) and arranged bilaterally, and equidistant, to the axial plane (M) of the main body (5) of the fixing element (1), and a pair (41, 42) of second sliding elements (41, 42) which are mounted rotatably about respective two vertical pins (Z3, Z4) borne inferiorly on the bearing element (6) and arranged bilaterally, and equidistant, to the axial plane (M) of the main body (5) of the fixing element (1).

6. The transport system (100) as claimed in any one of claims from 1 to 5, wherein the first contact wall (310, 320) of the at least a first sliding element (31, 32), for the contact with the first outer edge (12) of the first continuous upper guide channel (11), is conformed in such a way as to have a curved profile, and wherein the first contact wall (410, 420) of the at least a second sliding element (41, 42), for the contact with the second outer edge (23) of the second continuous lower guide channel (21), is conformed in such a way as to have a curved profile.

7. The transport system (100) as claimed in any one of claims from 1 to 6, wherein the guide system (100) comprises at least a pair of straight abutment walls (71, 72) arranged internally of the cogged belt and facing the straight branches (D1) of the cogged belt (D) and destined to constitute a straight abutment guide for the second wall (52) of the fixing elements (1) during movement thereof along a straight branch (D1) of the cogged belt (D).

8. The transport system (100) as claimed in any one of claims from 1 to 7, wherein the first wall (51) of each fixing element (5) is conformed in such a way as to comprise at least a projection (510) having a suitable shape for being inserted in a space existing between contiguous teeth of the cogging of the cogged belt (D), and wherein the fixing holes (53) of each fixing element (1) are made at the at least a projection (510).

9. The transport system (100) as claimed in any one of claims from 1 to 8, comprising a first upper covering element (81), mounted superiorly to the cogged belt (D) and conformed in such a way that in the relative lower face there is a groove in a closed loop defining the first continuous upper guide channel (11), and comprising a second lower covering element (82), mounted inferiorly to the cogged belt (D) and conformed in such a way that in the relative upper face there is a groove in a closed loop defining the second continuous lower guide channel (21).

## Patentansprüche

1. Transportsystem (100) für Produkte gemäß einem geschlossenen Transportweg, umfassend:
einen Zahnriemen (D), der in einer geschlossenen Schleife auf Antriebsrollen (P) gewickelt ist, die mit einer vertikalen Drehachse (Z) angeordnet sind;
eine Reihe von Stützelementen (S), die zum Stützen der jeweiligen Produkte konfiguriert sind und die freitragend an Durchgangslöchern (F) im Zahnriemen (D) mit diesem verbunden sind;
eine Reihe von Befestigungselementen (1), die so konfiguriert sind, dass sie innerhalb des Zahnriemens (D) an den Durchgangslöchern (F) angeordnet werden können, um die Stützelemente (S) freitragend am Zahnriemen (D) zu befestigen;
ein Führungssystem (10) für die Befestigungselemente (1);
wobei das Führungssystem (10) umfasst:
einen ersten durchgehenden oberen Führungskanal (11), der so ausgebildet ist, dass er eine jeweilige erste Außenkante (12) und eine jeweilige erste Innenkante (13) aufweist und sich gemäß einer geschlossenen Schleifenbahn (C) innerhalb der geschlossenen Schleife des Zahnriemens (D) erstreckt und gerade Abschnitte (C1) umfasst, die an geraden Verzweigungen (D1) des Zahnriemens (D) angeordnet sind, und gekrümmte Abschnitte (C2), die mit den geraden Abschnitten (C1) an gekrümmten Verzweigungen (D2) des Zahnriemens (D) verbunden sind,
einen zweiten durchgehenden unteren Führungskanal (21), der so geformt ist, dass er eine jeweilige zweite Außenkante (22) und eine jeweilige zweite Innenkante (23) aufweist und sich gemäß einem geschlossenen Schleifenweg (E) innerhalb der geschlossenen Schleife des Zahnriemens (D) erstreckt und gerade Abschnitte (E1) umfasst, die an geraden Verzweigungen (D1) des Zahnriemens (D) angeordnet sind, und gekrümmte Abschnitte (E2), die mit den geraden Abschnitten (E1) an gekrümmten Zweigen (D2) des Zahnriemens (D) verbunden sind,
und dass das Führungssystem (10) ferner für jedes Befestigungselement (1) umfasst:
mindestens ein erstes Gleitelement (31, 32), das oberhalb des Befestigungselements (1) angeordnet und so konfiguriert ist, dass es innerhalb des ersten durchgehenden oberen Führungskanals (11) gleiten kann, zwischen der ersten Außenkante (12) und der ersten Innenkante (13), wobei das mindestens eine erste Gleitelement (31, 32) so ausgebildet ist, dass es eine jeweilige erste Kontaktwand (310, 320) zum Kontakt mit der ersten Außenkante (12) des ersten durchgehenden oberen Führungskanals (11) umfasst, und eine jeweilige zweite Kontaktwand (311, 321) zum Kontakt mit der ersten Innenkante (13) des ersten durchgehenden oberen Führungskanals (11) aufweist, wobei das mindestens eine erste Gleitelement (31, 32) mit dem Befestigungselement (1) derart verbunden ist, dass es sich in Bezug auf das Befestigungselement (1) um eine vertikale Achse drehen kann, parallel zur vertikalen Drehachse (Z) der Antriebsrollen (P) des Zahnriemens (D) und in der Lage ist, sich axial in Bezug auf das Befestigungselement (1) entlang einer Translationsrichtung (DT) senkrecht zur vertikalen Achse zu verschieben, so dass während des Antriebs des Zahnriemens (D) das mindestens eine erste Gleitelement (31, 32) seine Ausrichtung und Position in Bezug auf das Befestigungselement (1) infolge seines Übergangs von einem geraden Abschnitt (C1) zu einem gekrümmten Abschnitt (C2) und umgekehrt des ersten durchgehenden oberen Führungskanals (11) ändern kann und somit seine Ausrichtung innerhalb des ersten durchgehenden oberen Führungskanals (11) so anpassen kann, dass mindestens eine der jeweiligen ersten Kontaktwand (310, 320) und der jeweiligen zweiten Kontaktwand (311, 321) immer mit der ersten Außenkante (12) bzw. der ersten Innenkante (13) des ersten durchgehenden oberen Führungskanals (11) in Kontakt steht;
und mindestens ein zweites Gleitelement (41, 42), das unterhalb des Befestigungselements (1) angeordnet und so konfiguriert ist, dass es innerhalb des zweiten durchgehenden unteren Führungskanals (21) gleiten kann, zwischen der zweiten Außenkante (22) und der zweiten Innenkante (23), wobei das mindestens eine zweite Gleitelement (41, 42) so ausgebildet ist, dass es eine jeweilige erste Kontaktwand (410, 420) zum Kontakt mit der zweiten Außenkante (22) des zweiten durchgehenden unteren Führungskanals (21) und eine jeweilige zweite Kontaktwand (411, 421) zum Kontakt mit der zweiten Innenkante (23) des zweiten durchgehenden unteren Führungskanals (21) aufweist, wobei das mindestens eine zweite Gleitelement (41, 42) an der Unterseite mit dem Befestigungselement (1) so verbunden ist, dass es sich in Bezug auf das Befestigungselement (1) um eine vertikale Achse drehen kann, parallel zur vertikalen Drehachse (Z) der Antriebsrollen (P) des Zahnriemens (D), und in der Lage ist, sich axial in Bezug auf das Befestigungselement (1) entlang einer Translationsrichtung (DT) senkrecht zur vertikalen Achse zu verschieben, so dass während des Antriebs des Zahnriemens (D) das mindestens eine zweite Gleitelement (41, 42) seine Ausrichtung und Position in Bezug auf das Befestigungselement (1) als Folge seines Übergangs von einem geraden Abschnitt (E1) zu einem gekrümmten Abschnitt (E2) und umgekehrt des zweiten durchgehenden unteren Führungskanals (21) ändern und somit seine Ausrichtung innerhalb des zweiten durchgehenden unteren Führungskanals (21) so anpassen kann, dass mindestens eine der jeweiligen ersten Kontaktwand (410, 420) und der jeweiligen zweiten Kontaktwand (411, 421) immer mit der zweiten Außenkante (22) bzw. der zweiten Innenkante (23) des zweiten durchgehenden unteren Führungskanals (21) in Kontakt steht;
wodurch die freitragende Position und die Ausrichtung der Stützelemente (S) in Bezug auf den Zahnriemen (D) stabil aufrechterhalten werden.

2. Transportsystem (100) nach Anspruch 1, wobei jedes Befestigungselement (1) einen Hauptkörper (5) mit einer ersten Vorderwand (51) und einer zweiten Rückwand (52) umfasst, wobei die erste Vorderwand (51) jeweilige Befestigungslöcher (53) umfasst und so ausgebildet ist, dass sie innen mit der Verzahnung des Zahnriemens (D) so gekoppelt ist, dass die jeweiligen Befestigungslöcher (53) an den Durchgangslöchern (F) positioniert sind, die im Zahnriemen (D) positioniert sind, um die Stützelemente (S) mittels entsprechender Verriegelungselemente am Zahnriemen (D) zu befestigen, und wobei der Hauptkörper (5) jedes Befestigungselements (1) so ausgebildet ist, dass er zwischen der ersten Vorderwand (51) und der zweiten Rückwand (52) ein Positionierungsgehäuse (54, 55) umfasst, und dass das Führungssystem (10) für jedes Befestigungselement (1) ein Lagerelement (6) für das mindestens eine erste Gleitelement (31, 32) und für das mindestens eine zweite Gleitelement (41, 42) umfasst, wobei das Lagerelement (6) so ausgebildet ist, dass es in das Positioniergehäuse (54, 55) des Befestigungselements (1) eingesetzt und verschiebbar gekoppelt werden kann, um zwischen der ersten Vorderwand (51) und der zweiten Vorderwand (52) des Befestigungselements (1) entsprechend der Verschieberichtung (DT) axial verschoben werden zu können, und wobei das mindestens eine erste Gleitelement (31, 32) oberhalb des Lagerelements (6) um einen jeweiligen vertikalen Stift (Z1, Z2) parallel zur vertikalen Drehachse (Z) der Riemenscheiben (P) drehbar gelagert ist und das mindestens eine zweite Gleitelement (41, 42) unterhalb des Lagerelements (6) um einen jeweiligen vertikalen Stift (Z3, Z4) parallel zur vertikalen Drehachse (Z) der Riemenscheiben (P) drehbar gelagert ist.

3. Das Transportsystem (100) nach Anspruch 2, wobei für jedes Befestigungselement (1) das Lagerelement (6) in das Positionierungsgehäuse (54, 55) des Befestigungselements (1) eingesetzt und verschiebbar auf mindestens einem jeweiligen Stift (P1, P2) montiert ist, der axial so angeordnet ist, dass er das Positionierungsgehäuse (54, 55) zwischen der ersten Vorderwand (51) und der zweiten Rückwand (52) des Hauptkörpers (5) des Befestigungselements (1) axial angeordneten Stiften (P1, P2) verschiebbar gelagert ist.

4. Transportsystem (100) nach einem der Ansprüche 2 und 3, wobei der Hauptkörper (5) jedes Befestigungselements (1) H-förmig ist, so dass zwischen der ersten Vorderwand (51) und der zweiten Rückwand (52) zwei Positionierungsgehäuse (54, 55) definiert, und wobei das Lagerelement (6) U-förmig ist, wobei die beiden Arme (61, 62) der U-Form jeweils in den beiden Positionierungsgehäusen (54, 55) positioniert sind.

5. Das Transportsystem (100) nach einem der Ansprüche 2 bis 4, wobei für jedes Befestigungselement (1) das Führungssystem (10) ein Paar (31, 32) erster Gleitelemente (31, 32) umfasst, die drehbar um jeweils zwei vertikale Stifte (Z1, Z2) angebracht sind, die oben am Lagerelement (6) gelagert sind und beidseitig und in gleichem Abstand zur axialen Ebene (M) des Hauptkörpers (5) des Befestigungselements (1) angeordnet sind, und ein Paar (41, 42) zweiter Gleitelemente (41, 42) umfasst, die drehbar um jeweils zwei vertikale Stifte (Z3, Z4) gelagert sind, die unterhalb des Lagerelements (6) angebracht und beidseitig und in gleichem Abstand zur Axialebene (M) des Hauptkörpers (5) des Befestigungselements (1) angeordnet sind.

6. Transportsystem (100) nach einem der Ansprüche 1 bis 5, wobei die erste Kontaktwand (310, 320) des mindestens einen ersten Gleitelements (31, 32) für den Kontakt mit der ersten Außenkante (12) des ersten durchgehenden oberen Führungskanals (11) in der Weise ausgebildet ist, dass sie ein gekrümmtes Profil aufweist, und wobei die erste Kontaktwand (410, 420) des mindestens einen zweiten Gleitelements (41, 42) für den Kontakt mit der zweiten Außenkante (23) des zweiten durchgehenden unteren Führungskanals (21) in der Weise ausgebildet ist, dass sie ein gekrümmtes Profil aufweist.

7. Das Transportsystem (100) nach einem der Ansprüche 1 bis 6, wobei das Führungssystem (100) mindestens ein Paar gerader Anschlagwände (71, 72) umfasst, die innerhalb des Zahnriemens angeordnet sind und den geraden Abschnitten (D1) des Zahnriemens (D) zugewandt sind und dazu bestimmt sind, eine gerade Anschlagführung für die zweite Wand (52) der Befestigungselemente (1) während deren Bewegung entlang eines geraden Abschnitts (D1) des Zahnriemens (D) zu bilden.

8. Das Transportsystem (100) nach einem der Ansprüche 1 bis 7, wobei die erste Wand (51) jedes Befestigungselements (5) so ausgebildet ist, dass sie mindestens einen Vorsprung (510) mit einer geeigneten Form aufweist, um in einen Raum zwischen benachbarten Zähnen der Verzahnung des Zahnriemens (D) eingeführt zu werden, und wobei die Befestigungslöcher (53) jedes Befestigungselements (1) an dem mindestens einen Vorsprung (510) ausgebildet sind.

9. Transportsystem (100) nach einem der Ansprüche 1 bis 8, umfassend ein erstes oberes Abdeckelement (81), das oberhalb des Zahnriemens (D) angebracht und so geformt ist, dass in der relativen Unterseite eine Nut in einer geschlossenen Schleife vorhanden ist, die den ersten durchgehenden oberen Führungskanal (11) definiert, und mit einem zweiten unteren Abdeckelement (82), das unterhalb des Zahnriemens (D) angebracht und so geformt ist, dass in der relativen Oberseite eine Nut in einer geschlossenen Schleife vorhanden ist, die den zweiten durchgehenden unteren Führungskanal (21) bildet.

## Revendications

1. Système de transport (100) de produits selon un trajet de transport en boucle fermée, comprenant:
une courroie crantée (D) enroulée en boucle fermée sur des poulies d'entraînement (P) qui sont disposées avec un axe de rotation vertical (Z);
une série d'éléments de support (S), configurés pour supporter des produits respectifs et qui sont couplés en porte-à-faux à la courroie crantée (D) au niveau de trous traversants (F) réalisés dans la courroie crantée (D);
une série d'éléments de fixation (1), configurés pour être disposés à l'intérieur de la courroie crantée (D) au niveau des trous traversants (F), pour fixer les éléments de support (S) en porte-à-faux à la courroie crantée (D);
un système de guidage (10) pour les éléments de fixation (1);
dans lequel le système de guidage (10) comprend:
un premier canal de guidage supérieur continu (11), conformé de manière à présenter un premier bord extérieur respectif (12) et un premier bord intérieur respectif (13) et qui s'étend selon un chemin en boucle fermée (C) à l'intérieur de la boucle fermée de la courroie crantée (D) et comprenant des parties droites (C1), disposées au niveau de branches droites (D1) de la courroie crantée (D), et des parties courbes (C2), reliées aux parties droites (C1), au niveau des branches courbes (D2) de la courroie crantée (D),
un deuxième canal de guidage inférieur continu (21), conformé de manière à avoir un deuxième bord extérieur respectif (22) et un deuxième bord intérieur respectif (23) et qui s'étend selon un trajet en boucle fermée (E) à l'intérieur de la boucle fermée de la courroie crantée (D) et comprenant des parties droites (E1), disposées au niveau des branches droites (D1) de la courroie crantée (D), et des parties courbes (E2), reliées aux parties droites (E1), au niveau des branches courbes (D2) de la courroie crantée (D),
et en ce que le système de guidage (10) comprend en outre, pour chaque élément de fixation (1) :
au moins un premier élément coulissant (31, 32) disposé au-dessus de l'élément de fixation (1) et configuré pour pouvoir coulisser à l'intérieur du premier canal de guidage supérieur continu (11), entre le premier bord extérieur (12) et le premier bord intérieur (13), le au moins un premier élément coulissant (31, 32) étant conformé de manière à comprendre une première paroi de contact respective (310, 320), destinée à entrer en contact avec le premier bord extérieur (12) du premier canal de guidage supérieur continu **(11),** et une deuxième paroi de contact respective (311, 321), destinée à entrer en contact avec le premier bord intérieur (13) du premier canal de guidage supérieur continu (11), dans lequel le au moins un premier élément coulissant (31, 32) est couplé de manière supérieure à l'élément de fixation (1) de telle sorte qu'il puisse tourner par rapport à l'élément de fixation (1) selon un axe vertical, parallèle à l'axe de rotation vertical (Z) des poulies d'entraînement (P) de la courroie crantée (D), et de pouvoir se déplacer axialement par rapport à l'élément de fixation (1) le long d'une direction de translation (DT) perpendiculaire à l'axe vertical, de sorte que, pendant l'entraînement de la courroie crantée (D), le au moins un premier élément coulissant (31, 32) puisse changer son orientation et sa position par rapport à l'élément de fixation (1) à la suite de son passage d'une partie droite (C1) à une partie courbe (C2), et vice versa, du premier canal de guidage supérieur continu (11) et ainsi adapter son orientation à l'intérieur du premier canal de guidage supérieur continu (11) de telle manière qu'au moins l'une parmi la première paroi de contact respective (310, 320) et la deuxième paroi de contact respective (311, 321) soit toujours en contact respectivement avec le premier bord extérieur (12) ou le premier bord intérieur (13) du premier canal de guidage supérieur continu (11);
et au moins un deuxième élément coulissant (41, 42) disposé en dessous de l'élément de fixation (1) et configuré pour pouvoir coulisser à l'intérieur du deuxième canal de guidage inférieur continu (21), entre le deuxième bord extérieur (22) et le deuxième bord intérieur (23), le au moins un deuxième élément coulissant (41, 42) étant conformé de manière à comprendre une première paroi de contact respective (410, 420), destinée à entrer en contact avec le deuxième bord extérieur (22) du deuxième canal de guidage inférieur continu (21), et une deuxième paroi de contact respective (411, 421), destinée à entrer en contact avec le deuxième bord intérieur (23) du deuxième canal de guidage inférieur continu (21), dans lequel le au moins un deuxième élément coulissant (41, 42) est couplé de manière inférieure à l'élément de fixation (1) de telle sorte qu'il puisse tourner par rapport à l'élément de fixation (1) selon un axe vertical, parallèle à l'axe de rotation vertical (Z) des poulies d'entraînement (P) de la courroie crantée (D), et de pouvoir se déplacer axialement par rapport à l'élément de fixation (1) le long d'une direction de translation (DT) perpendiculaire à l'axe vertical, de sorte que, pendant l'entraînement de la courroie crantée (D), le au moins un deuxième élément coulissant (41, 42) puisse modifier son orientation et sa position par rapport à l'élément de fixation (1) à la suite du passage de celui-ci d'une partie droite (E1) à une partie courbe (E2), et vice versa, du deuxième canal de guidage inférieur continu (21) et ainsi adapter son orientation à l'intérieur du deuxième canal de guidage inférieur continu (21) de telle manière qu'au moins l'un parmi la première paroi de contact respective (410, 420) et la deuxième paroi de contact respective (411, 421) est toujours en contact respectivement avec le deuxième bord extérieur (22) ou le deuxième bord intérieur (23) du deuxième canal de guidage inférieur continu (21);
maintenant ainsi de manière stable la position en porte-à-faux et l'orientation des éléments de support (S) par rapport à la courroie crantée (D).

2. Système de transport (100) selon la revendication 1, dans lequel chaque élément de fixation (1) comprend un corps principal (5) comprenant une première paroi avant (51) et une deuxième paroi arrière (52), dans lequel la première paroi avant (51) comprend des trous de fixation respectifs (53) et est conformée de manière à être couplée intérieurement à la denture de la courroie crantée (D) de telle sorte que les trous de fixation respectifs (53) soient positionnés au niveau des trous traversants (F) présents dans la courroie crantée (D) pour fixer les éléments de support (S) à la courroie crantée (D) au moyen d'éléments de blocage respectifs, et dans lequel le corps principal (5) de chaque élément de fixation (1) est conformé de manière à comprendre, entre la première paroi avant (51) et la deuxième paroi arrière (52), un logement de positionnement (54, 55), et en ce que le système de guidage (10) comprend, pour chaque élément de fixation (1), un élément de palier (6) pour au moins un premier élément coulissant (31, 32) et pour au moins un deuxième élément coulissant (41, 42), l'élément de palier (6) étant conformé de manière à être inséré et couplé de manière translative à l'intérieur du logement de positionnement (54, 55) de l'élément de fixation (1) afin de pouvoir se déplacer axialement entre la première paroi avant (51) et la deuxième paroi avant (52) de l'élément de fixation (1) selon la direction de translation (DT), et dans lequel le au moins un premier élément coulissant (31, 32) est monté au-dessus de l'élément de palier (6) de manière rotative autour d'un axe vertical respectif (Z1, Z2) parallèle à l'axe de rotation vertical (Z) des poulies (P), et le au moins un deuxième élément coulissant (41, 42) est monté en dessous de l'élément de palier (6) de manière à pouvoir tourner autour d'un axe vertical respectif (Z3, Z4) parallèle à l'axe de rotation vertical (Z) des poulies (P).

3. Système de transport (100) selon la revendication 2, dans lequel, pour chaque élément de fixation (1), l'élément de support (6) est inséré dans le boîtier de positionnement (54, 55) de l'élément de fixation (1) et est monté de manière coulissante sur au moins un axe respectif (P1, P2) disposé axialement pour traverser le boîtier de positionnement (54, 55) entre la première paroi avant (51) et la deuxième paroi arrière (52) du corps principal (5) de l'élément de fixation (1).

4. Système de transport (100) selon l'une quelconque des revendications 2 et 3, dans lequel le corps principal (5) de chaque élément de fixation (1) est en forme de H de manière à définir, entre la première paroi avant (51) et la deuxième paroi arrière (52), deux logements de positionnement (54, 55), et dans lequel l'élément de support (6) est en forme de U, les deux branches (61, 62) du U étant respectivement positionnées dans les deux logements de positionnement (54, 55).

5. Le système de transport (100) selon l'une quelconque des revendications 2 à 4, dans lequel, pour chaque élément de fixation (1), le système de guidage (10) comprend une paire (31, 32) de premiers éléments coulissants (31, 32) qui sont montés de manière rotative autour de deux axes verticaux respectifs (Z1, Z2) portés de manière supérieure sur l'élément de support (6) et disposés de manière bilatérale et équidistante par rapport au plan axial (M) du corps principal (5) de l'élément de fixation (1), et une paire (41, 42) de seconds éléments coulissants (41, 42) qui sont montés de manière rotative autour de deux axes verticaux respectifs (Z3, Z4) portés inférieurement sur l'élément de support (6) et disposés bilatéralement, et à égale distance, par rapport au plan axial (M) du corps principal (5) de l'élément de fixation (1).

6. Système de transport (100) selon l'une quelconque des revendications 1 à 5, dans lequel la première paroi de contact (310, 320) du au moins un premier élément coulissant (31, 32), destinée à entrer en contact avec le premier bord extérieur (12) du premier canal de guidage supérieur continu (11), est conformée de manière à présenter un profil incurvé, et dans lequel la première paroi de contact (410, 420) d'au moins un deuxième élément coulissant (41, 42), destinée à entrer en contact avec le deuxième bord extérieur (23) du deuxième canal de guidage inférieur continu (21), est conformée de manière à présenter un profil incurvé.

7. Système de transport (100) selon l'une quelconque des revendications 1 à 6, dans lequel le système de guidage (100) comprend au moins une paire de parois d'aboutement droites (71, 72) disposées à l'intérieur de la courroie crantée et faisant face aux branches droites (D1) de la courroie crantée (D) et destinées à constituer un guide de butée droit pour la deuxième paroi (52) des éléments de fixation (1) pendant leur déplacement le long d'une branche droite (D1) de la courroie crantée (D).

8. Système de transport (100) selon l'une quelconque des revendications 1 à 7, dans lequel la première paroi (51) de chaque élément de fixation (5) est conformée de manière à comprendre au moins une saillie (510) ayant une forme appropriée pour être insérée dans un espace existant entre des dents contiguës de la denture de la courroie crantée (D), et dans lequel les trous de fixation (53) de chaque élément de fixation (1) sont réalisés au niveau de la au moins une saillie (510).

9. Système de transport (100) selon l'une quelconque des revendications 1 à 8, comprenant un premier élément de recouvrement supérieur (81), monté au-dessus de la courroie crantée (D) et conformé de telle manière que, dans la face inférieure relative, il y ait une rainure en boucle fermée définissant le premier canal de guidage supérieur continu (11), et comprenant un deuxième élément de recouvrement inférieur (82), monté au-dessous de la courroie crantée (D) et conformé de telle manière que, dans la face supérieure relative, il y ait une rainure en boucle fermée définissant le deuxième canal de guidage inférieur continu (21).
